# EUROPEAN PATENT APPLICATION

(11) **EP 4 838 677 A1**
(43) Date of publication of application: **11.11.2026**
(21) Application number: 26174375.1
(22) Date of filing: 24.04.2026
(51) Int. Cl.: H01M 50/503, H01M 50/209, H01M 50/516, H01M 50/553, H01M 50/569

(54) **BUS BAR AND BATTERY MODULE INCLUDING THE SAME**

(30) Priority: 09.05.2025 KR 20250060530
(71) Applicant: SAMSUNG SDI CO., LTD., Yongin-si, Gyeonggi-do 17084 (KR)
(72) Inventor: Lee, Young Jin, 16678 Gyeonggi-do, Suwon-si (KR); Nam, Jin Won, 16678 Gyeonggi-do, Suwon-si (KR); Lee, Ju Hyeon, 16678 Gyeonggi-do, Suwon-si (KR); Yeom, Gil Choun, 16678 Gyeonggi-do, Suwon-si (KR)
(74) Representative: Meissner Bolte Partnerschaft mbB

(57) **Abstract**

A bus bar (3) and a battery module including the same are disclosed. A bus bar (3) includes a first connection body (10), a second connection body (20) facing the first connection body (10) in a first direction, a connection body (30) between the first connection body (10) and the second connection body (20), a plurality of first measurement holes (40) passing through the first connection body (10) and arranged in a second direction intersecting the first direction, and a plurality of second measurement holes (50) passing through the second connection body (20) and arranged in the second direction.

## Description

### BACKGROUND

### 1. Field

The present invention relates to a bus bar and a battery module including the same.

### 2. Description of Related Art

Generally, secondary batteries are batteries that can be charged and discharged, unlike primary batteries that cannot be recharged. Low-capacity secondary batteries may be used in portable small electronic devices, such as smartphones, feature phones, laptop computers, digital cameras, and camcorders, while high-capacity secondary batteries are widely used as power sources for motor driving in hybrid vehicles, electric vehicles, and the like, and batteries for power storage, or the like. These secondary batteries include an electrode assembly composed of a positive electrode and a negative electrode, a case which accommodates the electrode assembly, and an electrode terminal connected to the electrode assembly.

The secondary battery may be used as a battery pack formed of a plurality of unit battery cells connected in series and/or parallel to provide high energy density. The battery pack may be formed by interconnecting electrode terminals of a plurality of unit batteries to meet the required amount of power, and to implement a high-power secondary battery of, for example, an electric vehicle.

The above-described information disclosed in the technology that forms the background of the present invention is provided to facilitate understanding of the background of the present invention and may include information that does not constitute the related art.

### SUMMARY

According to the present invention, a bus bar that allows a defect in bonding to a secondary battery to be easily detected, and a battery module including the same, are provided.

The above and other aspects and features of the present invention will be described in or will be apparent from the following description of some embodiments of the present invention.

According to the present invention, a bus bar includes a first connection body, a second connection body facing the first connection body in a first direction, a connection body between the first connection body and the second connection body, a plurality of first measurement holes passing through the first connection body and arranged in a second direction intersecting the first direction, and a plurality of second measurement holes passing through the second connection body and arranged in the second direction.

The first connection body may include a plurality of first connection regions arranged in the second direction, the second connection body may include a plurality of second connection regions arranged in the second direction, and the first connection regions and the second connection regions may respectively face each other in the first direction.

Areas of the first connection regions may be the same as each other.

An area of each of the first connection regions and an area of each of the second connection regions may be the same as each other.

Each of the first measurement holes may be located in a different one of the first connection regions, and each of the second measurement holes may be located in a different one of the second connection regions.

The first measurement holes may be respectively located at ends of the first connection regions, and the second measurement holes may be respectively located at ends of the second connection regions.

A diameter of each of the first measurement holes and the second measurement holes may be greater than or equal to 2 mm and less than or equal to 3 mm.

The bus bar may further include a slit passing through the connection body and extending in the first direction.

The connection body may include a plurality of connection regions between the respective first connection regions and the respective second connection regions, and the slit may be between a pair of adjacent connection regions of the plurality of connection regions.

The slit may include a first end portion between a pair of adjacent first connection regions, and a second end portion between a pair of adjacent second connection regions.

A ratio of a length of the slit in the first direction to a sum of lengths of the first connection body, the second connection body, and the connection body in the first direction may be greater than or equal to 0.6 and less than or equal to 0.8.

The length of the slit in the first direction may be greater than or equal to 30 mm and less than or equal to 64 mm.

A width of the slit in the second direction may be greater than or equal to 1 mm and less than or equal to 2 mm.

The bus bar may further include a plurality of deformation holes passing through the connection body and arranged in the second direction.

The bus bar may further include a plurality of first guide holes passing through the first connection body, spaced apart from the first measurement holes, and arranged in the second direction, and a plurality of second guide holes passing through the second connection body, spaced apart from the second measurement holes, and arranged in the second direction.

A width of the first connection body in the second direction may be greater than or equal to 70 mm and less than or equal to 100 mm.

A sum of lengths of the first connection body, the second connection body, and the connection body in the first direction may be greater than or equal to 50 mm and less than or equal to 80 mm.

According to the present invention, a battery module includes a housing, a plurality of secondary batteries arranged in the housing in a first direction and each having a first terminal and a second terminal, and a plurality of bus bars each connecting the first terminal of one of a pair of adjacent secondary batteries and the second terminal of the other of the pair of secondary batteries, wherein each of the bus bars includes a first connection body connected to the first terminal, a second connection body facing the first connection body in the first direction and connected to the second terminal, a connection body disposed between the first connection body and the second connection body, a plurality of first measurement holes passing through the first connection body and arranged in a second direction intersecting the first direction, and a plurality of second measurement holes passing through the second connection body and arranged in the second direction.

The first connection body may include a plurality of first connection regions arranged in the second direction, the second connection body may include a plurality of second connection regions arranged in the second direction, and the first connection regions and the second connection regions may respectively face each other in the first direction.

The battery module may further include a first welding line in the first connection region and connecting each of the first connection regions to the first terminal, and a second welding line in the second connection region and connecting each of the second connection regions to the second terminal.

### BRIEF DESCRIPTION OF THE DRAWINGS

The drawings included with this specification illustrate some embodiments of the present invention, and further describe aspects and features of the present invention together with the detailed description of the present invention. However, the present invention is not to be construed as being limited to the drawings.
FIG. 1 is a perspective view schematically illustrating a configuration of a battery module according to an embodiment of the present invention;
FIG. 2 is a perspective view schematically illustrating a configuration of a secondary battery according to an embodiment of the present invention;
FIG. 3 is an exploded perspective view schematically illustrating a configuration of the secondary battery of FIG. 2;
FIG. 4 is a view schematically illustrating a configuration of an electrode assembly according to an embodiment of the present invention;
FIG. 5 is a perspective view schematically illustrating a configuration of a bus bar according to an embodiment of the present invention;
FIG. 6 is a plan view schematically illustrating a configuration of the bus bar of FIG. 5;
FIG. 7 is a view schematically illustrating a process of inspecting welding quality of the bus bar in a state in which the bus bar according to an embodiment of the present invention is completely welded to the secondary battery;
FIG. 8 is a view schematically illustrating a process of inspecting welding quality of the bus bar in a state in which the bus bar according to an embodiment of the present invention is not completely welded to the secondary battery;
FIG. 9 is a perspective view schematically illustrating a configuration of a bus bar according to another embodiment of the present invention;
FIG. 10 is a plan view schematically illustrating a configuration of the bus bar of FIG. 9;
FIG. 11 is an enlarged view schematically illustrating a configuration of a slit according to an embodiment of the present invention;
FIG. 12 is a view schematically illustrating a process of inspecting welding quality of the bus bar in a state in which the bus bar of FIG. 9 is completely welded to the secondary battery;
FIG. 13 is a view schematically illustrating a process of inspecting welding quality of the bus bar in a state in which the bus bar of FIG. 9 is not completely welded to the secondary battery;
FIG. 14 is a perspective view schematically illustrating a configuration of a bus bar according to another embodiment of the present invention; and
FIG. 15 is a plan view schematically illustrating a configuration of the bus bar of FIG. 14.

### DETAILED DESCRIPTION

Herein, some embodiments of the present invention will be described in further detail with reference to the attached drawings. Terms or words used in this specification and claims are not to be interpreted as being limited to ordinary or dictionary meanings and are to be interpreted as having meanings and concepts consistent with the technical idea of this invention based on the principle that the inventor can properly define the concept of the term in order to describe his or her invention in the best way. Accordingly, it is to be understood that the embodiments described herein, and the configurations illustrated in the drawings are only some embodiments of the invention and do not necessarily represent all of the technical ideas of the invention, and that there may be various equivalents and modifications that may replace them at the time of filing.

Further, when used herein, the terms "comprise" or "include" and/or "comprising" or "including" specify the presence of the mentioned shapes, numbers, steps, operations, members, elements, and/or groups thereof and are not intended to exclude the presence or addition of one or more other shapes, numbers, operations, members, elements, and/or groups thereof.

In addition, in order to facilitate understanding of the invention, the attached drawings may not be drawn to actual scale, and the dimensions of some components may be exaggerated. In addition, the same reference numbers may be assigned to the same components in different embodiments.

The statement that two objects for comparison are "equal" means the same or substantially the same. Therefore, equal, the same, or substantially the same may include deviations that are considered low in the art, for example, deviations of less than 5%. Additionally, uniformity of a parameter over a given region may mean uniformity from an average perspective.

Although "first," "second," and the like are used to describe various components, the components are not limited by these terms. These terms are used to distinguish one component from another, and unless otherwise specifically stated, it is to be understood that a first component may also be a second component.

Throughout the specification, unless otherwise specifically stated, each element may be singular or plural.

When an arbitrary configuration is placed "on (or under)" a component or "above (or below)" a component, it can mean not only that the arbitrary configuration is placed in contact with the top (or bottom) of the component, but also that other configurations can be interposed between the component and the arbitrary configuration placed on (or under) the component.

In addition, when a component is described as being "on," "connected to," or "coupled to" another component, the above components may be directly connected or coupled to each other, but it is to be understood that other components may be "interposed" between each component, or each component may be "connected," "coupled," or "linked" through another component.

As used herein, the term "and/or" includes any and all combinations of one or more of the associated listed items. Further, the use of "may" when describing embodiments of the present invention relates to "one or more embodiments of the present invention." Expressions such as "one or more" and "at least one" before the list of elements modify the entire list of elements and do not modify individual elements in the list.

Throughout the specification, "A and/or B" means A, B, or A and B unless otherwise stated to the contrary. That is, "and/or" includes any or all combinations of a plurality of listed items. When "C to D" is stated, it means greater than or equal to C and less than or equal to D unless otherwise specifically stated.

When "C to D" is stated, it means greater than or equal to C and less than or equal to D unless otherwise specifically stated. When phrases such as "at least one of A, B, and C," "at least one of A, B, or C," "at least one selected from group of A, B, and C," or "at least one selected from A, B, and C" are used to specify a list of elements A, B, and C, the phrases may refer to any and all suitable combinations.

The term "use" may be considered synonymous with the term "utilize." As used in the present specification, the terms "substantially," "about," and other similar terms are used as terms of approximation rather than terms of degree, and are intended to consider an inherent variation in measured or calculated values recognized by those skilled in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be named a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the drawings. It is to be understood that the spatially relative terms are intended to encompass different orientations of the device in use or operation in addition to the orientation depicted in the drawings. For example, if the elements or features in the drawings are inverted, an element described as "lower" or "below" "becomes "upper" or "above." Therefore, the term "below" can encompass both the upward and downward directions.

The terms used in the present specification are intended to describe embodiments of the present invention, and are not intended to limit the present invention.

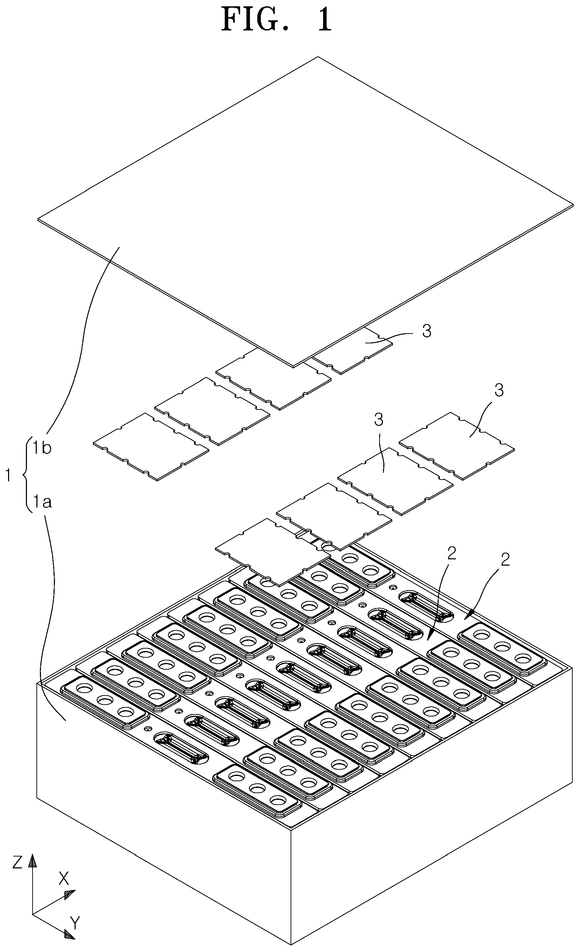

FIG. 1 is a perspective view schematically illustrating a configuration of a battery module according to an embodiment of the present invention.

Referring to FIG. 1, a battery module according to an embodiment may include a housing 1, a secondary battery 2, and a bus bar 3.

A first direction described below may be a direction parallel to an X-axis direction based on FIG. 1, a second direction may be a direction parallel to a Y-axis direction based on FIG. 1, and a third direction may be a direction parallel to a Z-axis direction based on FIG. 1.

The housing 1 forms a general exterior of the battery module, and may provide a space in which the secondary battery 2 may be accommodated.

The housing 1 according to an embodiment may include a housing body 1a and a cover 1b.

The housing body 1a may be formed to have a box shape, with an empty interior and an open side. However, a cross-sectional shape of the housing body 1a is not limited to the quadrangular shape shown in FIG. 1, and may have any of various shapes, such as any of a polygonal shape, a circular shape, and an elliptical shape.

The cover 1b may be coupled to the housing body 1a and may close an internal space of the housing body 1a. As an example, the cover 1b may be formed to have a generally plate shape and may be disposed to face the open side of the housing body 1a. The cover 1b may be fixed to the housing body 1a by any of various types of coupling methods, such as any of bolting, welding, fitting, and the like.

The secondary battery 2 may function as a unit structure which stores and supplies power in the battery module. The secondary battery 2 may be disposed inside the housing 1.

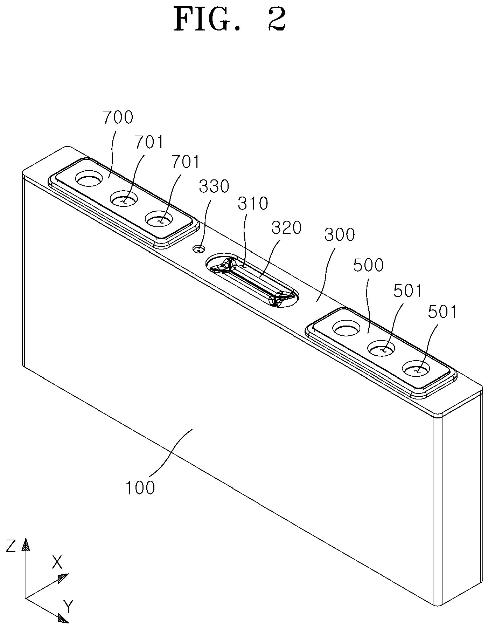

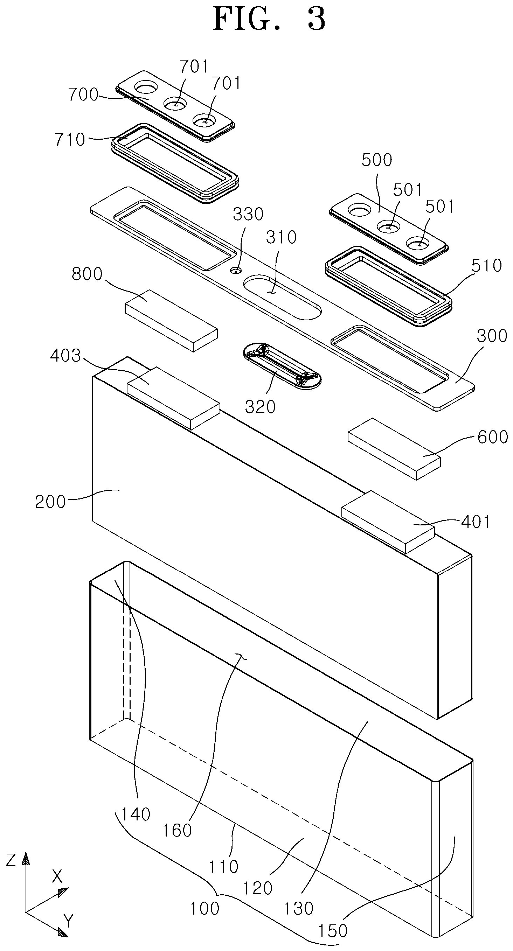

FIG. 2 is a perspective view schematically illustrating a configuration of a secondary battery according to an embodiment of the present invention; and FIG. 3 is an exploded perspective view schematically illustrating a configuration of the secondary battery of FIG. 2.

Herein, the secondary battery will be described by way of example as a prismatic battery. However, the present invention is not limited thereto, and the secondary battery may be a pouch-type battery or a cylindrical battery, for example.

Referring to FIGS. 2 and 3, the secondary battery 2 according to an embodiment includes a case 100, an electrode assembly 200, a cap plate 300, a first terminal 500, and a second terminal 700.

The case 100 may form a general exterior of the secondary battery 2 and accommodate the electrode assembly 200.

The case 100 according to an embodiment may include a bottom portion 110, a front surface portion 120, a rear surface portion 130, a first side surface portion 140, and a second side surface portion 150.

The bottom portion 110 may form a lower exterior of the case 100 (based on FIG. 3). The bottom portion 110 according to an embodiment may have a rectangular plate shape. The bottom portion 110 may be seated on a bottom surface of the housing body 1a.

The front surface portion 120, the rear surface portion 130, the first side surface portion 140, and the second side surface portion 150 may form a peripheral outer surface of the case 100.

The front surface portion 120, the rear surface portion 130, the first side surface portion 140, and the second side surface portion 150 according to an embodiment may have a form of plates extending upward (based on FIG. 3) from edges of the bottom portion 110. The front surface portion 120, the rear surface portion 130, the first side surface portion 140, and the second side surface portion 150 may be disposed to surround an upper space of the bottom portion 110. In an embodiment, the front surface portion 120, the rear surface portion 130, the first side surface portion 140, and the second side surface portion 150 may be disposed to form a rectangular cross-sectional shape.

The front surface portion 120 and the rear surface portion 130 may be disposed to face each other in the first direction. The front surface portion 120 and the rear surface portion 130 may be disposed parallel to each other. The front surface portion 120 and the rear surface portion 130 may have a same area.

The first side surface portion 140 and the second side surface portion 150 may be disposed to face each other in the second direction. The first side surface portion 140 and the second side surface portion 150 may be disposed parallel to each other. The first side surface portion 140 and the second side surface portion 150 may have a same area. The first side surface portion 140 and the second side surface portion 150 may each have a smaller area than each of the front surface portion 120 and the rear surface portion 130.

The case 100 may further include an opening 160. The opening 160 according to an embodiment may refer to a space enclosed or surrounded by upper end portions of the front surface portion 120, the rear surface portion 130, the first side surface portion 140, and the second side surface portion 150. The opening 160 may interconnect internal and external spaces of the case 100.

Accordingly, the case 100 according to an embodiment may have a rectangular parallelepiped shape with an open upper side.

The electrode assembly 200 may function as a unit structure for performing charging and discharging operations of power in the secondary battery. The electrode assembly 200 may be accommodated inside the case 100.

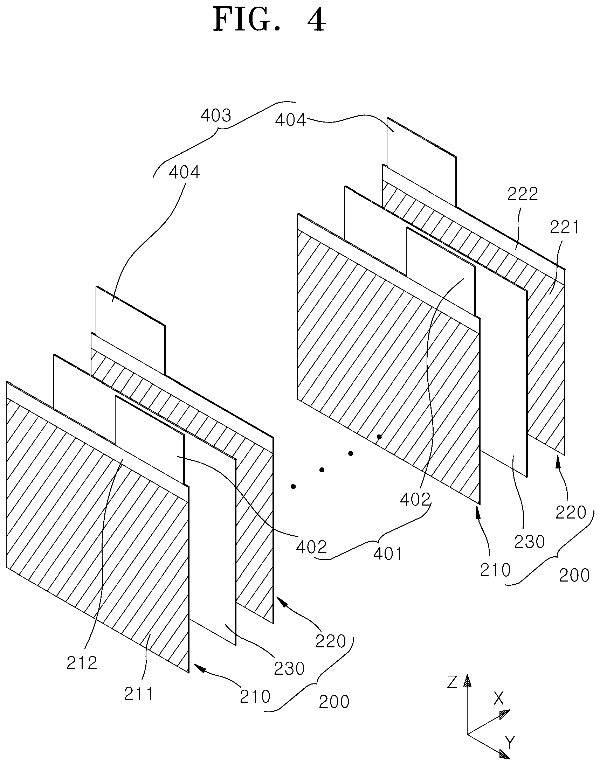

FIG. 4 is a view schematically illustrating a configuration of an electrode assembly according to an embodiment of the present invention.

Referring to FIGS. 2 to 4, the electrode assembly 200 according to an embodiment may include a first electrode 210, a second electrode 220, and a separator 230 disposed between the first electrode 210 and the second electrode 220. The first electrode 210, the separator 230, and the second electrode 220 may each be provided in plurality.

Herein, a case in which the electrode assembly 200 has a stack form in which a plurality of first electrodes 210, a plurality of separators 230, and a plurality of second electrodes 220 are stacked sequentially in the first direction will be described as an example. However, the electrode assembly 200 is not limited to the form described above, and may be formed such that the first electrode 210, the separator 230, and the second electrode 220 are stacked and then wound around a winding axis in a clockwise or counterclockwise direction.

The first electrode 210 may function as one of a positive electrode or a negative electrode of the electrode assembly 200. Herein, a case in which the first electrode 210 is the positive electrode of the electrode assembly 200 will be described as an example. However, the first electrode 210 is not limited thereto, and may function as the negative electrode of the electrode assembly 200.

The first electrode 210 according to an embodiment may be formed in a form of a foil including a metal material, such as aluminum or an aluminum alloy. A type, size, and shape of the first electrode 210 are not particularly limited as long as the first electrode 210 has conductivity and does not cause chemical changes in the secondary battery. A cross-sectional shape of the first electrode 210 may have any of various shapes other than the rectangular shape shown in FIG. 4.

A plurality of first electrodes 210 may be provided. The plurality of first electrodes 210 may be arranged in the first direction between the front surface portion 120 and the rear surface portion 130 of the case 100. A number of the first electrodes 210 may be varied according to a charging capacity or the like of the secondary battery 2.

A first active material layer 211 may be applied on at least a portion of the first electrode 210. The first active material layer 211 may be applied on both, or opposite, surfaces of the first electrode 210, or may be applied on only one surface of the first electrode 210.

In an embodiment, the first electrode 210 functions as a positive electrode, and the first active material layer 211 may include a positive electrode active material.

The positive electrode active material may include a compound (lithiated intercalation compound) capable of reversibly intercalating and deintercalating lithium. In an embodiment, the positive electrode active material may include one or more of composite oxides of lithium and a metal selected from cobalt, manganese, nickel, iron, and a combination thereof.

The first electrode 210 may include a first uncoated portion 212 on which the first active material layer 211 is not applied. The first uncoated portion 212 according to an embodiment may be disposed in an upper end region of the first electrode 210, which is disposed to face the opening 160 from the inside of the case 100. However, the first uncoated portion 212 is not limited to such a form, and, in an embodiment, may be formed across an entire edge region of the first electrode 210.

The second electrode 220 may function as the other of the positive electrode and the negative electrode of the electrode assembly 200. Herein, a case in which the second electrode 220 is the negative electrode of the electrode assembly 200 will be described as an example. However, the second electrode 220 is not limited thereto, and may function as the positive electrode of the electrode assembly 200.

A plurality of second electrodes 220 may be provided. The plurality of second electrodes 220 may be arranged in the first direction between the front surface portion 120 and the rear surface portion 130 of the case 100. The first electrodes 210 and the second electrodes 220 may be alternately disposed in the first direction. The second electrode 220 may be spaced by a distance (e.g., a predetermined distance) apart from the first electrode 210 in the first direction.

The second electrode 220 according to an embodiment may be formed in a form of a foil including a metal material, such as copper, a copper alloy, nickel, or a nickel alloy. A type, size, and shape of the second electrode 220 are not particularly limited as long as the second electrode 220 has conductivity and does not cause chemical changes in the secondary battery. A cross-sectional shape of the second electrode 220 may have any of various shapes other than the rectangular shape shown in FIG. 4.

A second active material layer 221 may be applied on at least a portion of the second electrode 220. The second active material layer 221 may be applied on both, or opposite, surfaces of the second electrode 220, or may be applied on only one surface of the second electrode 220.

In an embodiment, the second electrode 220 functions as the negative electrode, and the second active material layer 221 may include a negative electrode active material.

The negative electrode active material may be a material that reversibly intercalates/deintercalates lithium ions, a lithium metal, a lithium metal alloy, a material capable of doping and dedoping lithium, or a transition metal oxide.

In an embodiment, the material capable of reversible intercalation and deintercalation of lithium ions is a carbon-based negative electrode active material, and may include, for example, crystalline carbon, amorphous carbon, or a combination thereof. Examples of the crystalline carbon may include graphite, such as amorphous, plate-shaped, flaky (e.g., flake-shaped), spherical, or fibrous natural graphite or artificial graphite. Examples of the amorphous carbon may include soft carbon or hard carbon, a mesophase pitch carbide product, calcined coke, and the like.

The second electrode 220 may include a second uncoated portion 222 on which the second active material layer 221 is not applied. The second uncoated portion 222 according to an embodiment may be disposed in an upper end region of the second electrode 220 disposed to face the opening 160 from the inside of the case 100. However, the second uncoated portion 222 is not limited to such a form, and, in an embodiment, may be formed across an entire edge region of the second electrode 220.

The separator 230 may be disposed between the first electrode 210 and the second electrode 220. The separator 230 may prevent or substantially prevent a short circuit between the first electrode 210 and the second electrode 220 while allowing the movement of lithium ions between the first electrode 210 and the second electrode 220.

In an embodiment, the separator 230 may be disposed to cover the entire surface region of the electrode assembly 200. Accordingly, the separator 230 may prevent or substantially prevent the first electrode 210 and the second electrode 220 from being directly exposed to the outside of the electrode assembly 200.

In an embodiment, the separator 230 may be made of polyethylene, polypropylene, polyvinylidene fluoride, or a multilayer film of two or more layers thereof, and may be made of a mixed multilayer film, such as any of a polyethylene/polypropylene double-layered separator, a polyethylene/polypropylene/polyethylene three-layered separator, and a polypropylene/polyethylene/polypropylene three-layered separator.

The cap plate 300 may be coupled to the case 100 and may seal the case 100.

The cap plate 300 according to an embodiment may be formed to have a shape of a flat plate. The cap plate 300 may be disposed in the opening 160 of the case 100. The cap plate 300 may be disposed parallel to the bottom portion 110 of the case 100. The cap plate 300 may be seated on an upper end portion of the case 100, and, in an embodiment, on upper end portions of the front surface portion 120, the rear surface portion 130, the first side surface portion 140, and the second side surface portion 150. The cap plate 300 may be coupled to the case 100 by any of various types of coupling methods, such as any of welding, bolting, fitting, and the like. The cap plate 300 may be disposed to face the electrode assembly 200 in the third direction.

In the cap plate 300 according to an embodiment, a vent hole 310 and a vent 320 may be formed.

The vent hole 310 according to an embodiment may be formed to have a shape of a hole vertically passing through both, or opposite, surfaces of the cap plate 300 in the third direction. The vent hole 310 may provide a path for flames, gases, smoke, or the like formed inside the case 100 to be discharged to the outside of the case 100 in the event of a thermal runaway of the secondary battery 2 due to overcurrent or the like. A cross-sectional shape of the vent hole 310 may have any of various shapes, such as any of an elliptical shape, a circular shape, and a polygonal shape.

The vent 320 is installed in the vent hole 310, and may open and close in response to changes in internal pressure of the case 100. That is, the vent 320 may close the vent hole 310 during a normal operation of the secondary battery 2 to prevent or substantially prevent the electrolyte or the like inside the case 100 from leaking out of the case 100, or to block moisture, foreign substances, or the like from entering the case 100. The vent 320 may open the vent hole 310 during thermal runaway of the secondary battery 2 to guide flames, gases, smoke, or the like formed inside the case 100 to be discharged to the outside of the case 100.

The vent 320 according to an embodiment may be formed to have a generally plate shape. The vent 320 may be fixed to the cap plate 300 by any of various types of coupling methods, such as any of welding, bolting, fitting, and the like. The vent 320 may be disposed inside the vent hole 310, or may be disposed on an upper or lower side of the cap plate 300 to face the vent hole 310 in the third direction.

In an embodiment, a thickness of the vent 320 may be smaller than a thickness of the cap plate 300. Accordingly, the vent 320 may easily rupture or fracture if the internal pressure of the case 100 rises. In an embodiment, the vent 320 may include a notch formed concavely on the inside of the vent 320 to preferentially fracture if the internal pressure of the case 100 rises.

The cap plate 300 according to an embodiment may include an electrolyte injection port 330 which is formed through the cap plate 300 and in which a sealing cap may be installed. The electrolyte injection port 330 may be disposed to be spaced apart from the vent hole 310 by a distance (e.g., a predetermined distance) in the second direction or in a direction opposite to the second direction.

The first terminal 500 may pass through the cap plate 300 and may be disposed to face the electrode assembly 200. The first terminal 500 may be formed of an electrically conductive material, such as aluminum, nickel, copper, or the like. The first terminal 500 may be electrically connected to the first electrode 210 of the electrode assembly 200. As the first electrode 210 according to an embodiment functions as the positive electrode, the first terminal 500 may be a positive electrode terminal of the secondary battery 2.

The first terminal 500 according to an embodiment may be inserted into the cap plate 300. An upper end portion of the first terminal 500 may protrude to the outside of the cap plate 300, and a lower end portion of the first terminal 500 may be disposed inside the case 100. In FIG. 3, the first terminal 500 is illustrated as having a rectangular cross-sectional shape as an example, but a cross-sectional shape of the first terminal 500 is not limited thereto, and may have any of various shapes, such as a circular, elliptical, or polygonal shape.

A first gasket 510 may be installed between the cap plate 300 and the first terminal 500. The first gasket 510 may electrically isolate the cap plate 300 from the first terminal 500, and may prevent or substantially prevent moisture or foreign substances from entering between the cap plate 300 and the first terminal 500.

The first gasket 510 according to an embodiment may be formed of an insulating material, such as polyethylene (PE), polypropylene (PP), polyethylene terephthalate (PET), rubber, or the like. The first gasket 510 may be fixed between the cap plate 300 and the first terminal 500 by press-fitting, injection molding, adhesion, or the like.

The second terminal 700 may pass through the cap plate 300 and may be disposed to face the electrode assembly 200. The second terminal 700 may be formed of an electrically conductive material, such as aluminum, nickel, copper, or the like. The second terminal 700 may be electrically connected to the second electrode 220. As the second electrode 220 according to an embodiment functions as the negative electrode, the second terminal 700 may be a negative electrode terminal of the secondary battery 2.

The second terminal 700 according to an embodiment may be inserted into the cap plate 300. An upper end portion of the second terminal 700 may protrude to the outside of the cap plate 300, and a lower end portion of the second terminal 700 may be disposed inside the case 100. In FIG. 3, the second terminal 700 is illustrated as having a rectangular cross-sectional shape as an example, but a cross-sectional shape of the second terminal 700 is not limited thereto, and may have any of various shapes, such as a circular, elliptical, or polygonal shape.

The first terminal 500 and the second terminal 700 may be spaced apart from each other in the second direction. In an embodiment, the first terminal 500 and the second terminal 700 may be disposed to face each other in the second direction with the vent 320 interposed therebetween.

A second gasket 710 may be installed between the cap plate 300 and the second terminal 700. The second gasket 710 may electrically isolate the cap plate 300 from the second terminal 700, and may prevent or substantially prevent moisture or foreign substances from entering between the cap plate 300 and the second terminal 700.

The second gasket 710 according to an embodiment may be formed of an insulating material, such as polyethylene (PE), polypropylene (PP), polyethylene terephthalate (PET), rubber, or the like. The second gasket 710 may be fixed between the cap plate 300 and the second terminal 700 by press-fitting, injection molding, adhesion, or the like.

The secondary battery 2 according to an embodiment may further include a first tab member 401, a first current collector 600, a second tab member 403, and a second current collector 800.

The first tab member 401 and the first current collector 600 may electrically connect the first electrode 210 and the first terminal 500.

The first tab member 401 may be connected to the first electrode 210 and may extend toward the cap plate 300 from the electrode assembly 200. In an embodiment, the first electrode 210 is the positive electrode, and the first tab member 401 may function as a positive electrode tab of the secondary battery 2. However, the first tab member 401 is not limited thereto, and may function as a negative electrode tab of the secondary battery 2 if the first electrode 210 is the negative electrode.

The first tab member 401 may include a first tab 402.

The first tab 402 according to an embodiment may have a form of a foil extending in the third direction from the first uncoated portion 212 of the first electrode 210. The first tab 402 may have a generally rectangular shape. However, a shape of the first tab 402 is not limited thereto, and may be varied.

In an embodiment, the first tab 402 may be integrally formed with the first electrode 210. For example, the first tab 402 may be a remaining region of the first uncoated portion 212 after a partial region of the first uncoated portion 212 has been cut or removed through a process, such as notching. In an embodiment, the first tab 402 may be fabricated separately from the first electrode 210 and then connected to the first uncoated portion 212 by welding or the like. In an embodiment, a material of the first tab 402 may be the same as a material of the first electrode 210.

A plurality of first tabs 402 may be provided. A number of first tabs 402 may be the same as a number of first electrodes 210. The first tabs 402 may individually extend from the first uncoated portions 212 of different first electrodes 210. The adjacent first tabs 402 may be disposed to face each other in the first direction. The adjacent first tabs 402 may be disposed parallel to each other. Accordingly, the first tab member 401 according to an embodiment may be an assembly of the plurality of first tabs 402 stacked in the first direction. The adjacent first tabs 402 may be in contact with each other and may be spaced apart from each other by a thickness of the separator 230.

The first current collector 600 may be disposed between the first tab member 401 and the first terminal 500, and connected to the first tab member 401 and the first terminal 500. The first current collector 600 may function as a component that electrically interconnects the first tab member 401 and the first terminal 500. To this end, the first current collector 600 may be formed of a conductive material, such as copper, aluminum, or nickel.

The first current collector 600 according to an embodiment may be disposed between the first tab member 401 and the cap plate 300. Both, or opposite, surfaces of the first current collector 600 may be in contact with an upper end portion of the first tab member 401 and a lower end portion of the first terminal 500, respectively. The first current collector 600 may be bonded to the first tab member 401 and the first terminal 500 by laser welding or the like. A specific shape of the first current collector 600 is not limited to the shape illustrated in FIG. 3, and may have any of various shapes that can electrically interconnect the first tab member 401 and the first terminal 500 between the first tab member 401 and the first terminal 500.

In an embodiment, a first terminal groove 501 recessed downward from an upper surface of the first terminal 500 may be formed in the first terminal 500. The first terminal groove 501 may reduce a thickness of a partial region of the first terminal 500 to be bonded to the first current collector 600, thereby facilitating a bonding operation between the first terminal 500 and the first current collector 600. After entering an inside of the first terminal groove 501, a laser welding device may bond a lower surface of the first terminal 500 and an upper surface of the first current collector 600 to each other.

A plurality of first terminal grooves 501 may be provided. The plurality of first terminal grooves 501 may be arranged in the second direction. As an example, three first terminal grooves 501 may be formed.

The second tab member 403 and the second current collector 800 may electrically connect the second electrode 220 and the second terminal 700.

The second tab member 403 may be connected to the second electrode 220 and may extend toward the cap plate 300 from the electrode assembly 200. In an embodiment, the second electrode 220 is the negative electrode, and the second tab member 403 may function as a negative electrode tab of the secondary battery 2. However, the second tab member 403 is not limited thereto, and may function as a positive electrode tab of the secondary battery 2 if the second electrode 220 is the positive electrode. The first tab member 401 and the second tab member 403 may be spaced apart from each other in the second direction.

The second tab member 403 according to an embodiment may include a second tab 404.

The second tab 404 according to an embodiment may have a form of a foil extending in the third direction from the second uncoated portion 222 of the second electrode 220. The second tab 404 may have a generally rectangular shape. However, a shape of the second tab 404 is not limited thereto, and may be varied.

In an embodiment, the second tab 404 may be integrally formed with the second electrode 220. For example, the second tab 404 may be a remaining region of the second uncoated portion 222 after a partial region of the second uncoated portion 222 has been cut or removed through a process, such as notching. In an embodiment, the second tab 404 may be fabricated separately from the second electrode 220 and then connected to the second uncoated portion 222 by welding or the like. In an embodiment, a material of the second tab 404 may be the same as a material of the second electrode 220.

A plurality of second tabs 404 may be provided. A number of the second tabs 404 may be the same as a number of second electrodes 220. The second tabs 404 may individually extend from the second uncoated portions 222 of different second electrodes 220. The adjacent second tabs 404 may be disposed to face each other in the first direction. The adjacent second tabs 404 may be disposed parallel to each other. Accordingly, the second tab member 403 according to an embodiment may be an assembly of the plurality of second tabs 404 stacked in the first direction. The adjacent second tabs 404 may be in contact with each other and may be spaced apart from each other by the thickness of the separator 230.

The second current collector 800 may be disposed between the second tab member 403 and the second terminal 700, and may be connected to the second tab member 403 and the second terminal 700. The second current collector 800 may electrically interconnect the second tab member 403 and the second terminal 700. To this end, the second current collector 800 may be formed of a conductive material, such as copper, aluminum, or nickel.

The second current collector 800 according to an embodiment may be disposed between the second tab member 403 and the cap plate 300. Both, or opposite, surfaces of the second current collector 800 may be in contact with an upper end of the second tab member 403 and a lower end of the second terminal 700, respectively. The second current collector 800 may be bonded to the second tab member 403 and the second terminal 700 by laser welding or the like. However, a specific shape of the second current collector 800 is not limited to the shape illustrated in FIG. 3, and may have any of various shapes that can electrically interconnect the second tab member 403 and the second terminal 700 between the second tab member 403 and the second terminal 700.

In an embodiment, a second terminal groove 701 recessed downward from an upper surface of the second terminal 700 may be formed in the second terminal 700. The second terminal groove 701 may reduce a thickness of a partial region of the second terminal 700 to be bonded to the second current collector 800, thereby facilitating a bonding operation between the second terminal 700 and the second current collector 800. After entering the inside of the second terminal groove 701, a laser welding device may bond a lower surface of the second terminal 700 and an upper surface of the second current collector 800 to each other.

A plurality of second terminal grooves 701 may be provided. The plurality of second terminal grooves 701 may be arranged in the second direction. As an example, three second terminal grooves 701 may be formed.

In the battery module according to an embodiment, a plurality of secondary batteries 2 may be provided. The plurality of secondary batteries 2 may be arranged in the first direction inside the housing 1. A number of the secondary batteries 2 may be varied depending on a size, shape, or the like of the housing 1.

The first terminal 500 of one of a pair of adjacent secondary batteries 2 and the second terminal 700 of the other of the pair of adjacent secondary batteries 2 may be disposed to face each other in the first direction. That is, the front surface portion 120 of one of the adjacent secondary batteries 2 may be disposed to face the rear surface portion 130 of the other of the adjacent secondary batteries 2.

The bus bars 3 may electrically connect the plurality of secondary batteries 2. As an example, the bus bar 3 may connect the first terminal 500 of one of a pair of adjacent secondary batteries 2 in the first direction and the second terminal 700 of the other of the pair of adjacent secondary batteries 2. A plurality of bus bars 3 may be provided. Each of the bus bars 3 may individually connect a pair of adjacent secondary batteries 2 in the first direction. The bus bar 3 may be formed of a conductive material, such as copper, nickel, or aluminum.

A longitudinal direction of the bus bar 3 may be disposed parallel to the first direction, and a width direction of the bus bar 3 may be disposed parallel to the second direction.

In an embodiment, a length L0 of the bus bar 3 in the first direction may be greater than or equal to 50 mm and less than or equal to 80 mm. If the length L0 of the bus bar 3 in the first direction is less than 50 mm, a contact area of the bus bar 3 and the first and second terminals 500 and 700 may be excessively reduced. If the length L0 of the bus bar 3 in the first direction is greater than 80 mm, a separation distance between adjacent secondary batteries 2 may increase excessively.

In an embodiment, a width WO of the bus bar 3 in the second direction may be greater than or equal to 70 mm and less than or equal to 100 mm. In an embodiment, the length L0 of the bus bar 3 in the first direction may be 57 mm, and the width WO of the bus bar 3 in the second direction may be 70.5 mm.

If the width WO of the bus bar 3 in the second direction is less than 70 mm, a welding area of the bus bar 3 and the first and second terminals 500 and 700 may be excessively reduced. If the width WO of the bus bar 3 in the second direction is greater than 100 mm, the bus bar 3 may interfere with the vent hole 310 of the secondary battery 2.

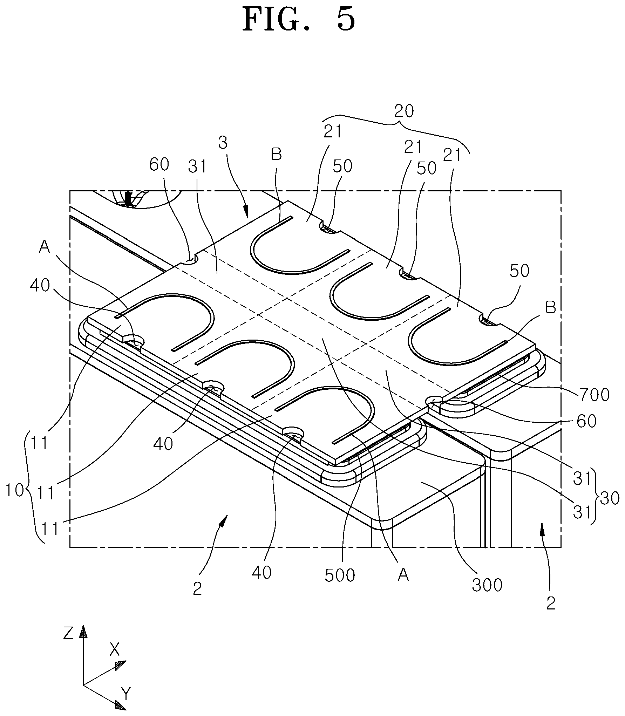

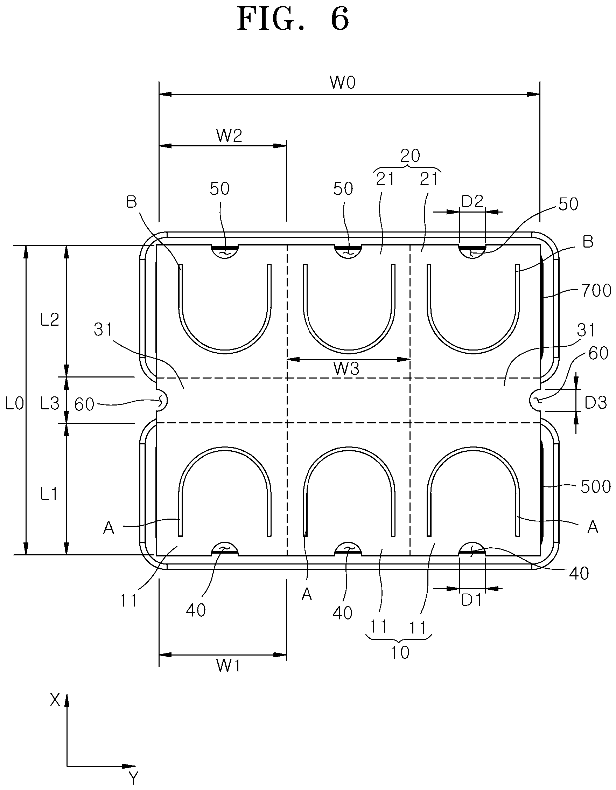

FIG. 5 is a perspective view schematically illustrating a configuration of a bus bar according to an embodiment of the present invention; and FIG. 6 is a plan view schematically illustrating a configuration of the bus bar of FIG. 5.

Referring to FIGS. 5 and 6, the bus bar 3 according to an embodiment includes a first connection body 10, a second connection body 20, a connection body 30, a first measurement hole 40, and a second measurement hole 50.

The first connection body 10 forms a first side of an exterior of the bus bar 3 and may be connected to the first terminal 500. The first connection body 10 may be disposed to face the first terminal 500 of one of a pair of adjacent secondary batteries 2 in the first direction. A lower surface of the first connection body 10 may be in contact with an upper surface of the first terminal 500.

The first connection body 10 according to an embodiment may include a plurality of first connection regions 11.

The plurality of first connection regions 11 may be arranged in the second direction. The plurality of first connection regions 11 according to an embodiment may be partial regions of the first connection body 10 partitioned in the second direction. That is, the first connection body 10 may be an assembly of the plurality of first connection regions 11.

The plurality of first connection regions 11 may be electrically interconnected. The first connection regions 11 may be respectively disposed to face different first terminal grooves 501 of the first terminal 500 in the third direction.

In an embodiment, shapes of the plurality of first connection regions 11 may be the same as each other. In an embodiment, areas of the plurality of first connection regions 11 may be the same as each other. In FIGS. 5 and 6, each of the first connection regions 11 is illustrated as having a rectangular shape by way of example, but a shape of the first connection region 11 is not limited thereto and may be varied depending on a shape of the first connection body 10 and the like.

In an embodiment, a length of the first connection body 10 in the first direction may be the same as a length L1 of each of the first connection regions 11 in the first direction. The length of the first connection body 10 in the first direction may be varied within a range less than the length L0 of the bus bar 3 in the first direction.

In an embodiment, a width of the first connection body 10 in the second direction may be the same as the width WO of the bus bar 3 in the second direction. In an embodiment, the width of the first connection body 10 in the second direction may be the same as a sum of a width W1 of each of the plurality of first connection regions 11 in the second direction. As an example, the width of the first connection body 10 in the second direction may be 70.5 mm, and the width W1 of each of the first connection regions 11 in the second direction may be 23.5 mm.

The first connection body 10 may be electrically and mechanically connected to the first terminal 500 through a first welding line A.

The first welding line A may be disposed in the first connection region 11 and may connect the first connection region 11 to the first terminal 500.

The first welding line A according to an embodiment may be a mixture of the first connection region 11 and the first terminal 500, which is melted by heat from a flame or laser and then solidified. The first welding line A may be formed to have a certain (e.g., predetermined) pattern on the first connection region 11. As an example, the first welding line A may have a shape of an arc or a horseshoe with one side open. In an embodiment, the open side of the first welding line A may be disposed to face the side opposite to the connection body 30, which will be described below. In an embodiment, a separation distance between both, or opposite, end portions of the first welding line A may be greater than a diameter of the first terminal groove 501. As an example, the separation distance between both, or opposite, end portions of the first welding line A may be 13 mm.

A plurality of first welding lines A may be provided. The first welding lines A may be individually or respectively disposed in different first connection regions 11. In an embodiment, shapes and dimensions of the plurality of first welding lines A may be the same as each other.

The second connection body 20 forms the other side of the exterior of the bus bar 3 and may be connected to the second terminal 700. The second connection body 20 may be disposed to face the first connection body 10 in the first direction. The first connection body 10 and the second connection body 20 may be spaced by a distance (e.g., a predetermined distance) apart from each other in the first direction. The second connection body 20 may be disposed to face the second terminal 700 of one of the pair of adjacent secondary batteries 2 in the first direction. A lower surface of the second connection body 20 may be in contact with an upper surface of the second terminal 700.

The second connection body 20 according to an embodiment may include a plurality of second connection regions 21.

The plurality of second connection regions 21 may be arranged in the second direction. The plurality of second connection regions 21 according to an embodiment may be partial regions of the second connection body 20 partitioned in the second direction. That is, the second connection body 20 may be an assembly of the plurality of second connection regions 21.

The second connection regions 21 may be respectively disposed to face different first connection regions 11 in the first direction. The plurality of second connection regions 21 may be electrically interconnected. The second connection regions 21 may be respectively disposed to face different second terminal grooves 701 of the second terminal 700 in the third direction.

In an embodiment, shapes of the plurality of second connection regions 21 may be the same as each other. In an embodiment, areas of the plurality of second connection regions 21 may be the same as each other. In an embodiment, the area of second connection region 21 may be the same as the area of the first connection region 11. In FIGS. 5 and 6, each of the second connection regions 21 is illustrated as having a rectangular shape by way of example, but a shape of the second connection region 21 is not limited thereto and may be varied depending on a shape of the second connection body 20 and the like.

In an embodiment, a length of the second connection body 20 in the first direction may be the same as a length L2 of each of the second connection regions 21 in the first direction. The length of the second connection body 20 in the first direction may be varied within a range less than the length L0 of the bus bar 3 in the first direction. The length L2 of the second connection region 21 in the first direction may be the same as the length L1 of the first connection region 11 in the first direction, or the length L2 may differ from the length L1 of the first connection region 11 in the first direction.

In an embodiment, a width of the second connection body 20 in the second direction may be the same as the width WO of the bus bar 3 in the second direction. In an embodiment, the width of the second connection body 20 in the second direction may be the same as a sum of a width W2 of each of the plurality of second connection regions 21 in the second direction. As an example, the width of the second connection body 20 in the second direction may be 70.5 mm, and the width W2 of each of the second connection regions 21 in the second direction may be 23.5 mm.

The second connection body 20 may be electrically and mechanically connected to the second terminal 700 through a second welding line B.

The second welding line B may be disposed in the second connection region 21 and may connect the second connection region 21 to the second terminal 700.

The second welding line B according to an embodiment may be a mixture of the second connection region 21 and the second terminal 700, which is melted by heat from a flame or laser and then solidified. The second welding line B may be formed to have a pattern (e.g., a predetermined pattern) on the second connection region 21. As an example, the second welding line B may have the shape of an arc or a horseshoe with one side open. The open side of the second welding line B may be disposed to face the side opposite to the connection body 30, which will be described below. In an embodiment, a separation distance between both, or opposite, end portions of the second welding line B may be greater than a diameter of the second terminal groove 701. As an example, the separation distance between both, or opposite, end portions of the second welding line B may be 13 mm.

A plurality of second welding lines B may be provided. The second welding lines B may be individually or respectively disposed in different second connection regions 21. In an embodiment, shapes and dimensions of the plurality of second welding lines B may be the same as each other.

The connection body 30 may be disposed between the first connection body 10 and the second connection body 20. The connection body 30 may electrically and mechanically connect the first connection body 10 and the second connection body 20. The connection body 30 may be disposed between a pair of adjacent secondary batteries 2 in the first direction.

The connection body 30 may include a plurality of connection regions 31.

The plurality of connection regions 31 may be arranged in the second direction. The plurality of connection regions 31 according to an embodiment may be partial regions of the connection body 30 partitioned in the second direction. That is, the connection body 30 may be an assembly of the plurality of connection regions 31.

The connection regions 31 may be respectively disposed between different first connection regions 11 and different second connection regions 21. Both, or opposite, end portions of the connection region 31 may be connected to the first connection region 11 and the second connection region 21, respectively.

The plurality of connection regions 31 may be electrically interconnected. In an embodiment, shapes of the plurality of connection regions 31 may be the same as each other. In an embodiment, areas of the plurality of connection regions 31 may be the same as each other. In FIGS. 5 and 6, each of the connection regions 31 is illustrated as having a rectangular shape by way of example, but a shape of the connection region 31 is not limited thereto and may be varied depending on a shape of the connection body 30 and the like.

In an embodiment, a length of the connection body 30 in the first direction may be the same as a length L3 of each of the connection regions 31 in the first direction. The length of the connection body 30 in the first direction may be varied within a range less than the length L0 of the bus bar 3 in the first direction. A sum (L1 + L2 + L3) of the length L1 of the first connection body 10 in the first direction, the length L2 of the second connection body 20 in the first direction, and the length L3 of the connection body 30 in the first direction may be the same as the length L0 of the bus bar 3 in the first direction. In an embodiment, the sum (L1 + L2 + L3) of the length L1 of the first connection body 10 in the first direction, the length L2 of the second connection body 20 in the first direction, and the length L3 of the connection body 30 in the first direction may be greater than or equal to 50 mm and less than or equal to 80 mm. As an example, the sum (L1 + L2 + L3) of the length L1 of the first connection body 10 in the first direction, the length L2 of the second connection body 20 in the first direction, and the length L3 of the connection body 30 in the first direction may be 57 mm.

In an embodiment, a width of the connection body 30 in the second direction may be the same as the width WO of the bus bar 3 in the second direction. The width of the connection body 30 in the second direction may be the same as a sum of a width W3 of each of the plurality of connection regions 31 in the second direction. As an example, the width of the connection body 30 in the second direction may be 70.5 mm, and the width W3 of each of the connection regions 31 in the second direction may be 23.5 mm.

The first measurement hole 40 may pass through the first connection body 10. The first measurement hole 40 may expose a portion of the upper surface of the first terminal 500 facing the first connection body 10. The first measurement hole 40 may provide a space in the first connection body 10 to allow a probe of a resistance meter or the like to come into contact with the first terminal 500 when inspecting a welded state of the bus bar 3 with respect to the secondary battery 2.

The first measurement hole 40 according to an embodiment may have a form of a hole that passes through the first connection body 10, and, in an embodiment, the first connection region 11 in the third direction. The first measurement hole 40 may be disposed at an end of the first connection region 11 located on the side opposite to the connection region 31. In an embodiment, as the first measurement hole 40 is disposed at the end of the first connection region 11, the first measurement hole 40 may have a generally semicircular shape. In an embodiment, a diameter D1 of the first measurement hole 40 may be greater than or equal to 2 mm and less than or equal to 3 mm. As an example, the diameter D1 of the first measurement hole 40 may be 2.5 mm. If the diameter D1 of the first measurement hole 40 is less than 2 mm, the probe of the resistance meter or the like may not easily come into contact with the first terminal 500. If the diameter D1 of the first measurement hole 40 is greater than 3 mm, the first measurement hole 40 may interfere with the first terminal groove 501 formed in the first terminal 500.

A plurality of first measurement holes 40 may be provided. The plurality of first measurement holes 40 may be arranged in the second direction. The first measurement holes 40 may be individually or respectively disposed in different first connection regions 11. In an embodiment, shapes and dimensions of the plurality of first measurement holes 40 may be the same as each other.

The second measurement hole 50 may pass through the second connection body 20. The second measurement hole 50 may expose a portion of the upper surface of the second terminal 700 facing the second connection body 20. The second measurement hole 50 may provide a space in the second connection body 20 to allow the probe of the resistance meter or the like to come into contact with the second terminal 700 when inspecting a welded state of the bus bar 3 with respect to the secondary battery 2.

The second measurement hole 50 according to an embodiment may have a form of a hole that passes through the second connection body 20, and, in an embodiment, the second connection region 21 in the third direction. The second measurement hole 50 may be disposed at an end of the second connection region 21 located on the side opposite to the connection region 31. In an embodiment, as the second measurement hole 50 is disposed at the end of the second connection region 21, the second measurement hole 50 may have a generally semicircular shape. In an embodiment, a diameter D2 of the second measurement hole 50 may be greater than or equal to 2 mm and less than or equal to 3 mm. As an example, the diameter D2 of the second measurement hole 50 may be 2.5 mm. If the diameter D2 of the second measurement hole 50 is less than 2 mm, the probe of the resistance meter or the like may not easily come into contact with the second terminal 700. If the diameter D2 of the second measurement hole 50 is greater than 3 mm, the second measurement hole 50 may interfere with the second terminal groove 701 formed in the second terminal 700.

A plurality of second measurement holes 50 may be provided. The plurality of second measurement holes 50 may be arranged in the second direction. The second measurement holes 50 may be individually or respectively disposed in different second connection regions 21. In an embodiment, shapes and dimensions of the plurality of second measurement holes 50 may be the same as each other.

Herein, a process of inspecting welding quality of the bus bar 3 according to an embodiment will be described.

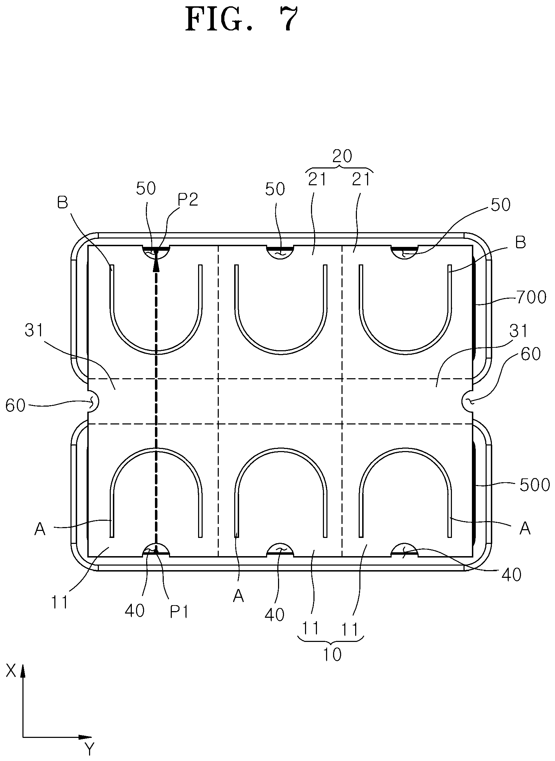

FIG. 7 is a view schematically illustrating a process of inspecting welding quality of a bus bar in a state in which the bus bar according to an embodiment of the present invention is completely welded to the secondary battery.

Referring to FIG. 7, the state in which the bus bar 3 is completely welded to the secondary battery 2 may refer to a state in which all of the first connection regions 11 are bonded to the first terminal 500 through the first welding lines A, and all of the second connection regions 21 are bonded to the second terminal 700 through the second welding lines B.

In this state, a first measurement point P1 and a second measurement point P2 may be set on the first terminal 500 and the second terminal 700, respectively, which are exposed through the first measurement hole 40 and the second measurement hole 50 facing each other in the first direction, and a resistance meter may measure a resistance value between the first measurement point P1 and the second measurement point P2.

Various types of devices capable of measuring electrical resistance between two components, such as a direct current (DC) low-resistance meter or a multimeter, may be used as the resistance meter. A set resistance value may be stored in the resistance meter. The set resistance value may be a resistance value measured by the resistance meter when a current flows through the bus bar 3, which connects the first terminal 500 of one of a pair of secondary batteries 2 facing each other in the first direction, and the second terminal 700 of the other of the pair of secondary batteries 2, along a path parallel to the first direction.

As the first welding line A and the second welding line B are formed on both the first connection region 11 and the second connection region 21 facing each other in the first direction, a current applied through the first measurement point P1 may sequentially flow along the path parallel to the first direction through the first welding line A, the first connection region 11, the connection region 31, the second connection region 21, and the second welding line B. Accordingly, the resistance value between the first measurement point P1 and the second measurement point P2 may be measured to be equal to the set resistance value.

The same process may be performed in the same manner at other first and second measurement holes 40 and 50, which are adjacent in the second direction to the first and second measurement holes 40 and 50 in which the first measurement point P1 and the second measurement point P2 are set.

When the bus bar 3 is completely welded to the secondary battery 2, resistance values measured at all of the first measurement holes 40 and the second measurement holes 50 may each be equal to the set resistance value, and an operator may determine that the bus bar 3 is completely welded to the secondary battery 2.

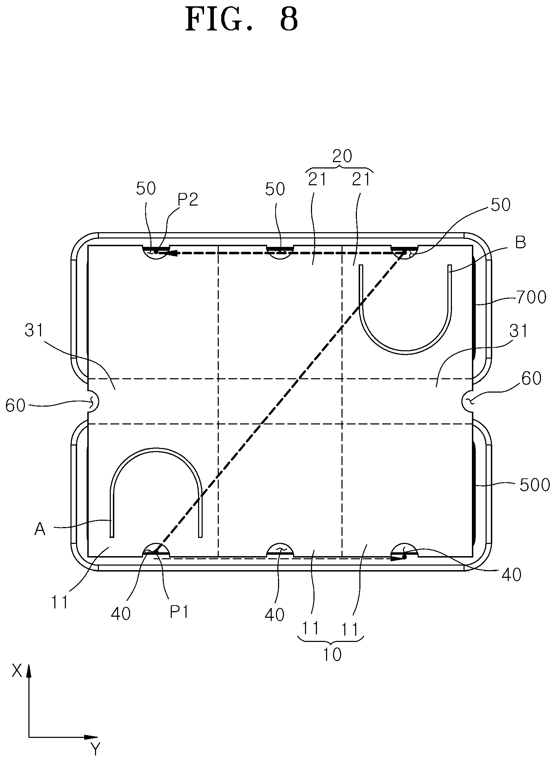

FIG. 8 is a view schematically illustrating a process of inspecting welding quality of the bus bar in a state in which the bus bar according to an embodiment of the present invention is not completely welded to the secondary battery.

Referring to FIG. 8, the state in which the bus bar 3 is not completely welded to the secondary battery 2 may refer to a state in which the first welding line A is not formed on any one of the first connection regions 11, or the second welding line B is not formed on any one of the second connection regions 21.

As an example, as illustrated in FIG. 8, when the first welding line A is formed on the first connection region 11 having the first measurement hole 40 in which the first measurement point P1 is set, but the second welding line B is not formed on the second connection region 21 having the second measurement hole 50 in which the second measurement point P2 is set, a current transfer path between the first measurement point P1 and the second measurement point P2 may not be formed parallel to the first direction.

A current applied to the first connection region 11 through the first measurement point P1 may flow along an inclined path with respect to the first direction, rather than along the path parallel to the first direction, and may be transferred to the nearest second welding line B.

Thereafter, the current may be transferred from the second welding line B to the second terminal 700, may flow along a path parallel to the second direction through the second terminal 700, and may be transferred to the second measurement point P2.

As the current transfer path increases relatively as described above, the resistance value between the first measurement point P1 and the second measurement point P2 may be measured to be greater than the set resistance value, and the operator may determine that the bus bar 3 is not completely welded to the secondary battery 2 based on the difference in resistance value.

The bus bar 3 according to an embodiment may further include a deformation hole 60.

The deformation hole 60 may pass through the connection body 30 and may absorb deformation of the bus bar 3 during thermal expansion of the secondary battery 2. The deformation hole 60 may allow elongation of the connection body 30 if a relative distance between the first connection body 10 and the second connection body 20 increases due to thermal expansion of the secondary battery 2.

The deformation hole 60 according to an embodiment may have a form of a hole that passes through the connection region 31 of the connection body 30 in the third direction.

The deformation hole 60 may be disposed to be offset from the first measurement hole 40 and the second measurement hole 50 in the first direction. As an example, the deformation hole 60 may be disposed so as not to face the first measurement hole 40 and the second measurement hole 50 in the first direction. In an embodiment, a diameter D3 of the deformation hole 60 may be greater than or equal to 2 mm and less than or equal to 3 mm. As an example, the diameter D3 of the deformation hole 60 may be 2.5 mm. If the diameter D3 of the deformation hole 60 is less than 2 mm, elongation of the connection body 30 may not be smoothly performed. If the diameter D3 of the deformation hole 60 is greater than 3 mm, the deformation hole 60 may interfere with the current transfer path parallel to the first direction, which is formed between the first measurement hole 40 and the second measurement hole 50.

A plurality of deformation holes 60 may be provided. The plurality of deformation holes 60 may be arranged in the second direction. A number of the deformation holes 60 is not limited to two, as illustrated in FIG. 6, but may be varied to three, four, or another number.

Herein, a battery module according to another embodiment of the present invention will be described.

The battery module according to the present embodiment may be configured to be different from the battery module according to the previously described embodiment of the present invention in a configuration of the bus bar 3.

Accordingly, in describing the battery module according to the present embodiment, only the configuration of the bus bar 3, which is different from the battery module according to the previously described embodiment of the present invention, will be described.

For the remaining configuration of the battery module according to the present embodiment, the description of the battery module according to the previously described embodiment of the present invention may be applied.

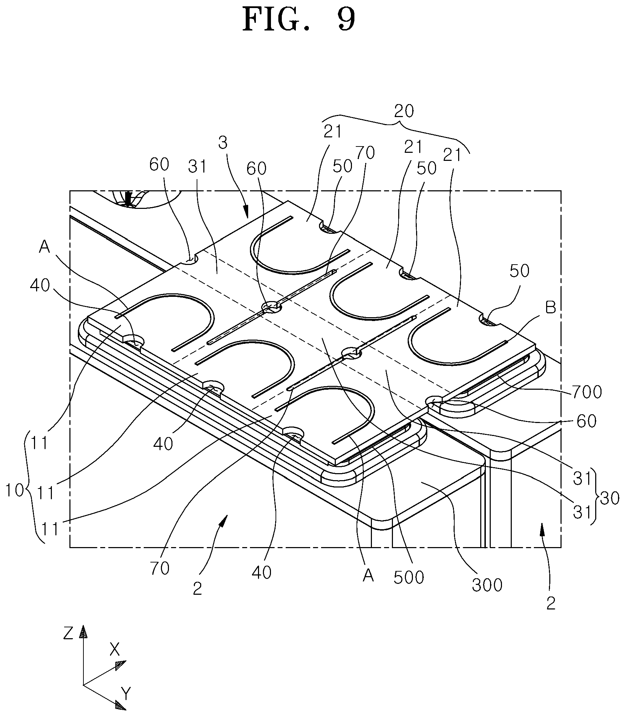

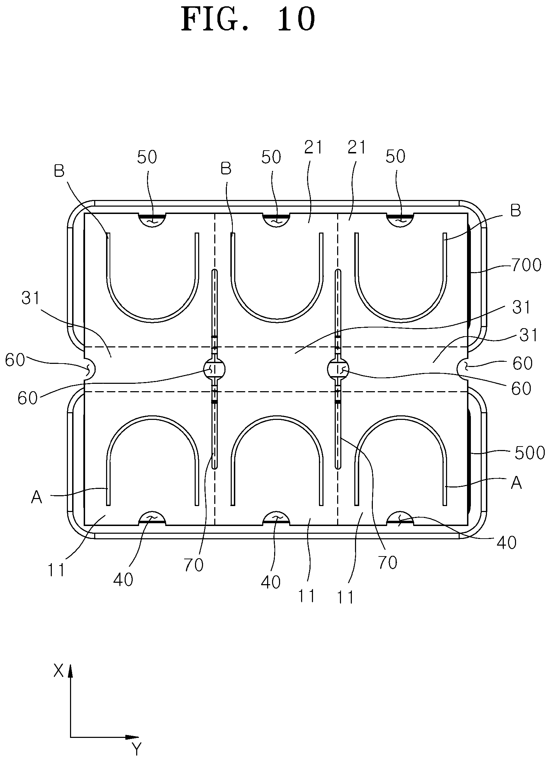

FIG. 9 is a perspective view schematically illustrating a configuration of a bus bar according to another embodiment of the present invention; and FIG. 10 is a plan view schematically illustrating a configuration of the bus bar of FIG. 9.

Referring to FIGS. 9 and 10, the bus bar 3 according to the present embodiment may further include a slit 70.

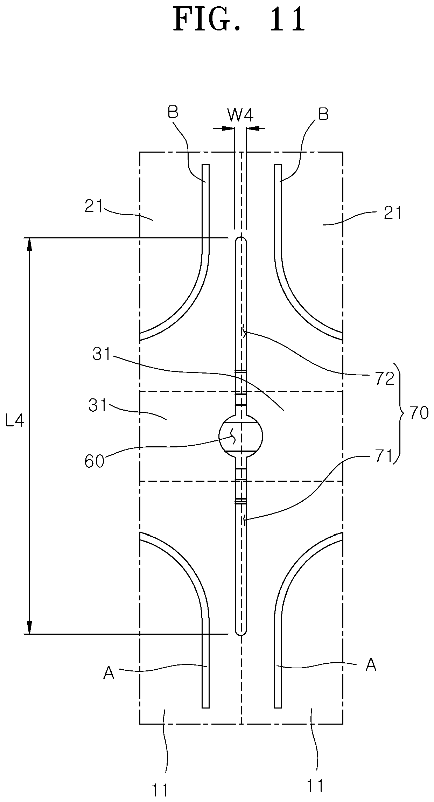

FIG. 11 is an enlarged view schematically illustrating a configuration of the slit according to the present embodiment of the present invention.

Referring to FIGS. 9 to 11, the slit 70 according to the present embodiment may pass through the connection body 30 and extend in the first direction. A plurality of slits 70 may be provided. The plurality of slits 70 may be arranged in the second direction. Each of the slits 70 may be individually or respectively disposed between a pair of adjacent connection regions 31.

The slit 70 may block electrical connection between the pair of adjacent connection regions 31, thereby relatively increasing a length of a current transfer path when either the first welding line A is not formed on the first connection region 11, or the second welding line B is not formed on the second connection region 21, the first connection region 11 and the second connection region 21 facing each other in the first direction. Accordingly, the slit 70 may increase a difference between a resistance value measured by the resistance meter and a set resistance value in the event of a welding defect of the bus bar 3, thereby enabling the operator to more easily determine the welding defect of the bus bar 3.

A length L4 of the slit 70 in the first direction may be greater than the length L3 of the connection body 30 in the first direction. As an example, the slit 70 may include a first end portion 71 disposed between a pair of adjacent first connection regions 11 and a second end portion 72 disposed between a pair of adjacent second connection regions 21. Accordingly, the slit 70 may further increase the length of the current transfer path if either the first welding line A is not formed on the first connection region 11, or the second welding line B is not formed on the second connection region 21, the first connection region 11 and the second connection region 21 facing each other in the first direction.

In an embodiment, a ratio (L4 / (L1 + L2 + L3)) of the length L4 of the slit 70 in the first direction to the sum (L1 + L2 + L3) of the lengths of the first connection body 10, the second connection body 20, and the connection body 30 in the first direction may be greater than or equal to 0.6 and less than or equal to 0.8. In an embodiment, the length L4 in the first direction of the slit 70 may be greater than or equal to 30 mm and less than or equal to 64 mm. As an example, the length L4 in the first direction of the slit 70 may be 35 mm.

If the ratio (L4 / (L1 + L2 + L3)) of the length L4 of the slit 70 in the first direction to the sum (L1 + L2 + L3) of the lengths of the first connection body 10, the second connection body 20, and the connection body 30 in the first direction is less than 0.6, a difference between the resistance value measured by the resistance meter and the set resistance value may be excessively reduced in the event of a welding defect of the bus bar 3.

If the ratio (L4 / (L1 + L2 + L3)) of the length L4 of the slit 70 in the first direction to the sum (L1 + L2 + L3) of the lengths of the first connection body 10, the second connection body 20, and the connection body 30 in the first direction is greater than 0.8, a mechanical strength of the bus bar 3 may be excessively reduced.

In an embodiment, a width W4 of the slit 70 in the second direction may be greater than or equal to 1 mm and less than or equal to 2 mm. As an example, the width W4 of the slit 70 in the second direction may be 1 mm. If the width W4 of the slit 70 in the second direction is less than 1 mm, processing difficulty of the slit 70 may increase, and a detour of the current transfer path caused by the slit 70 may not be performed smoothly. If the width W4 of the slit 70 in the second direction is greater than 2 mm, the slit 70 may directly interfere with the first welding line A or the second welding line B.

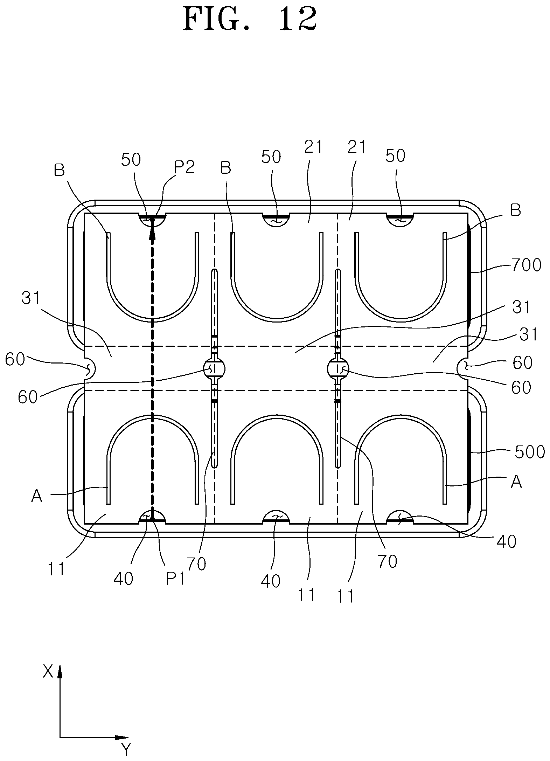

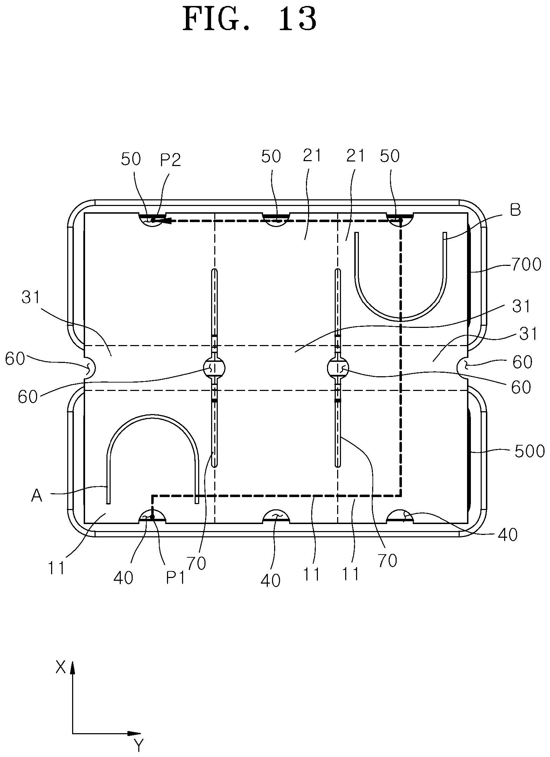

FIG. 12 is a view schematically illustrating a process of inspecting welding quality of the bus bar in a state in which the bus bar according to the embodiment of FIG. 9 is completely welded to the secondary battery; and FIG. 13 is a view schematically illustrating a process of inspecting welding quality of the bus bar in a state in which the bus bar according to the embodiment of FIG. 9 is not completely welded to the secondary battery.

Referring to FIG. 12, when the first welding line A and the second welding line B are formed on all of the first connection regions 11 and the second connection regions 21, a current applied through the first measurement point P1 may sequentially flow along a path parallel to the first direction through the first welding line A, the first connection region 11, the connection region 31, the second connection region 21, and the second welding line B. Accordingly, the resistance value between the first measurement point P1 and the second measurement point P2 may be measured to be equal to the set resistance value.

The same process may be performed in the same manner at other first and second measurement holes 40 and 50, which are adjacent in the second direction to the first and second measurement holes 40 and 50 in which the first measurement point P1 and the second measurement point P2 are set.

When the bus bar 3 is completely welded to the secondary battery 2, resistance values measured at all of the first measurement holes 40 and the second measurement holes 50 may each be equal to the set resistance value, and the operator may determine that the bus bar 3 is completely welded to the secondary battery 2.

Referring to FIG. 13, when the first welding line A is formed on the first connection region 11 having the first measurement hole 40 in which the first measurement point P1 is set, but the second welding line B is not formed on the second connection region 21 having the second measurement hole 50 in which the second measurement point P2 is set, a current transfer path between the first measurement point P1 and the second measurement point P2 may not be formed parallel to the first direction.

More specifically, the current applied to the first connection region 11 through the first measurement point P1 may not flow in the first direction but may flow toward the nearest second welding line B.

In this process, the current may not flow along the shortest path between the first connection region 11 and the second welding line B, but may be transferred to the second welding line B while detouring around a region in which the slit 70 is formed.

Thereafter, the current may be transferred from the second welding line B to the second terminal 700, may flow along a path parallel to the second direction through the second terminal 700, and may be transferred to the second measurement point P2.

As the current transfer path increases relatively as described above, the resistance value between the first measurement point P1 and the second measurement point P2 may be measured to be greater than the set resistance value, and the operator may determine that the bus bar 3 is not completely welded to the secondary battery 2 based on the difference in resistance value.

Herein, a battery module according to another embodiment of the present invention will be described.

The battery module according to the present embodiment may be configured to be different from the battery modules according to the previously described embodiments of the present invention in a detailed configuration of the bus bar 3.

Accordingly, in describing the battery module according to the present embodiment, only the detailed configuration of the bus bar 3, which is different from the battery modules according to the previously described embodiments of the present invention, will be described.

For a remaining configuration of the battery module according to the present embodiment, the description of the battery module according to the previously described embodiments of the present invention may be applied.

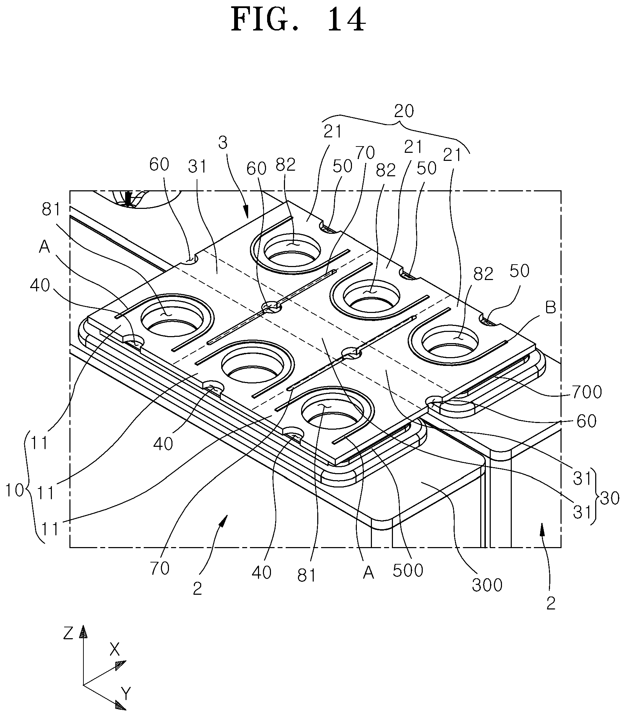

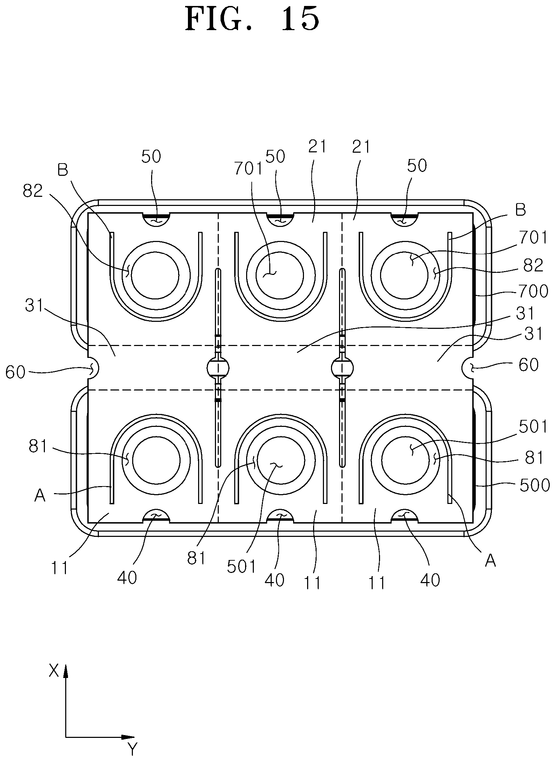

FIG. 14 is a perspective view schematically illustrating a configuration of a bus bar according to another embodiment of the present invention; and FIG. 15 is a plan view schematically illustrating a configuration of the bus bar of FIG. 14.

Although FIGS. 14 and 15 illustrate the bus bar 3 including the slit 70 by way of example, the bus bar 3 according to the present embodiment is not limited thereto and may be configured without including the slit 70.

Referring to FIGS. 14 and 15, the bus bar 3 according to the present embodiment may further include a first guide hole 81 and a second guide hole 82.

The first guide hole 81 may pass through the first connection body 10 and may be spaced apart from the first measurement hole 40. The first guide hole 81 may be disposed to face the first terminal groove 501 formed in the first terminal 500. The first guide hole 81 may guide a relative position of the first connection body 10 with respect to the first terminal 500 during a process of bonding the first connection body 10 to the first terminal 500.

A plurality of first guide holes 81 may be provided. The plurality of first guide holes 81 may be arranged in the second direction. The first guide holes 81 may individually pass through different first connection regions 11 in the third direction. The first guide holes 81 may be individually or respectively disposed to face different first terminal grooves 501.

In an embodiment, an area of the first guide hole 81 may be larger than an area of the first terminal groove 501. Accordingly, an operator may easily identify an alignment state between the first guide hole 81 and the first terminal groove 501 from the outside of the first connection body 10.

The first guide hole 81 may be disposed between both, or opposite, end portions of the first welding line A. A diameter of the first guide hole 81 may be smaller than a separation distance between both, or opposite, end portions of the first welding line A. As an example, the diameter of the first guide hole 81 may be 12 mm.

The second guide hole 82 may pass through the second connection body 20 and may be spaced apart from the second measurement hole 50. The second guide hole 82 may be disposed to face the second terminal groove 701 formed in the second terminal 700. The second guide hole 82 may guide a relative position of the second connection body 20 with respect to the second terminal 700 during a process of bonding the second connection body 20 to the second terminal 700.

A plurality of second guide holes 82 may be provided. The plurality of second guide holes 82 may be arranged in the second direction. The second guide holes 82 may individually pass through different second connection regions 21 in the third direction. The second guide holes 82 may be individually or respectively disposed to face different second terminal grooves 701.

In an embodiment, an area of the second guide hole 82 may be larger than an area of the second terminal groove 701. Accordingly, an operator may easily identify an alignment state between the second guide hole 82 and the second terminal groove 701 from the outside of the second connection body 20.

The second guide hole 82 may be disposed between both, or opposite, end portions of the second welding line B. A diameter of the second guide hole 82 may be smaller than the separation distance between both end portions of the second welding line B. As an example, the diameter of the second guide hole 82 may be 12 mm.

According to embodiments of the present invention, welding quality of a bus bar bonded to terminals of a secondary battery can be easily measured at multiple points through a plurality of first measurement holes and a plurality of second measurement holes.

According to embodiments of the present invention, if welding of a bus bar is defective, the accuracy of resistance inspection can be further improved by relatively increasing a length of a current transfer path using a slit.

However, aspects and effects obtainable through the present invention are not limited to the above aspects and effects, and other aspects and technical effects that are not mentioned will be clearly understood by those skilled in the art from the description of the present invention.

While the present invention has been described with reference to some embodiments shown in the drawings, these embodiments are merely illustrative and it is to be understood that various modifications and equivalent other embodiments can be derived by those skilled in the art on the basis of the embodiments.

## Claims

1. A bus bar (3) comprising:
a first connection body (10);
a second connection body (20) facing the first connection body (10) in a first direction;
a connection body (30) between the first connection body (10) and the second connection body (20);
a plurality of first measurement holes (40) passing through the first connection body (10) and arranged in a second direction intersecting the first direction; and
a plurality of second measurement holes (50) passing through the second connection body (20) and arranged in the second direction.

2. The bus bar (3) according to claim 1, wherein the first connection body (10) comprises a plurality of first connection regions (11) arranged in the second direction,
the second connection body (20) comprises a plurality of second connection regions (21) arranged in the second direction, and
the first connection regions (11) and the second connection regions (21) respectively face each other in the first direction.

3. The bus bar (3) according to claim 2, wherein areas of the first connection regions (11) are the same as each other.

4. The bus bar (3) according to claim 2 or 3, wherein an area of each of the first connection regions (11) and an area of each of the second connection regions (21) are the same as each other.

5. The bus bar (3) according to any of claims 2 to 4, wherein each of the first measurement holes (40) is located in a different one of the first connection regions (11), and
each of the second measurement holes (50) is located in a different one of the second connection regions (21).

6. The bus bar (3) according to claim 5, wherein the first measurement holes (40) are respectively located at ends of the first connection regions (11), and
the second measurement holes (50) are respectively located at ends of the second connection regions (21).

7. The bus bar (3) according to any of claims 2 to 6, further comprising a slit (70) passing through the connection body (30) and extending in the first direction.

8. The bus bar (3) according to claim 7, wherein the connection body (30) comprises a plurality of connection regions (31) between the respective first connection regions (11) and the respective second connection regions (21), and
the slit (70) is between a pair of adjacent connection regions (31).

9. The bus bar (3) according to claim 8, wherein the slit (70) comprises:
a first end portion (71) between a pair of adjacent first connection regions (11); and
a second end portion (72) between a pair of adjacent second connection regions (21).

10. The bus bar (3) according to claim 8 or 9, wherein a ratio of a length of the slit (70) in the first direction to a sum of lengths of the first connection body (10), the second connection body (20), and the connection body (30) in the first direction is greater than or equal to 0.6 and less than or equal to 0.8.

11. The bus bar (3) according to any of claims 2 to 10, further comprising a plurality of deformation holes (60) passing through the connection body (30) and arranged in the second direction.

12. The bus bar (3) according to any of claims 2 to 11, further comprising:
a plurality of first guide holes (81) passing through the first connection body (10), spaced apart from the first measurement holes (40), and arranged in the second direction; and
a plurality of second guide holes (82) passing through the second connection body (20), spaced apart from the second measurement holes (50), and arranged in the second direction.

13. A battery module comprising:
a housing (1);
a plurality of secondary batteries (2) arranged in the housing (1) in a first direction and each comprising a first terminal (500) and a second terminal (700); and
a plurality of bus bars (3) each connecting the first terminal (500) of one of a pair of adjacent secondary batteries (2) of the plurality of secondary batteries (2) and the second terminal (700) of the other of the pair of adjacent secondary batteries (2),
wherein each of the plurality of bus bars (3) comprises:
a first connection body (10) connected to the first terminal (500);
a second connection body (20) facing the first connection body (10) in the first direction and connected to the second terminal (700);
a connection body (30) between the first connection body (10) and the second connection body (20);
a plurality of first measurement holes (40) passing through the first connection body (10) and arranged in a second direction intersecting the first direction; and
a plurality of second measurement holes (50) passing through the second connection body (20) and arranged in the second direction.

14. The battery module according to claim 13, wherein the first connection body (10) comprises a plurality of first connection regions (11) arranged in the second direction,
the second connection body (20) comprises a plurality of second connection regions (21) arranged in the second direction, and
the first connection regions (11) and the second connection regions (21) respectively face each other in the first direction.

15. The battery module according to claim 14, further comprising:
a first welding line (A) in the first connection region (11) and connecting each of the first connection regions (11) to the first terminal (500); and
a second welding line (B) in the second connection region (21) and connecting each of the second connection regions (21) to the second terminal (700).
